# EUROPEAN PATENT SPECIFICATION

(11) **EP 1 141 520 B1**
(45) Date of publication and mention of the grant of the patent: **28.05.2003**
(21) Application number: 99967994.7
(22) Date of filing: 29.12.1999
(51) Int. Cl.: E21B 43/40, B01D 45/16

(54) **METHOD FOR REMOVING CONDENSABLES FROM A NATURAL GAS STREAM**
METHODE ZUR ENTFERNUNG KONDENSIERBARER BESTANDTEILE AUS ERDGAS
PROCEDE D'EVACUATION DE CONDENSABLES D'UN FLUX DE GAZ NATUREL

(30) Priority: 31.12.1998 US 223885; 31.12.1998 US 223887
(43) Date of publication of application: 10.10.2001
(73) Proprietor: SHELL INTERNATIONALE RESEARCH MAATSCHAPPIJ B.V., 2596 HR Den Haag (NL)
(72) Inventor: TJEENK WILLINK, Cornelis, Antonie, NL-2288 GD Rijswijk (NL); VAN BERLO, Andre, Olgar, Henry, NL-2288 GD Rijswijk (NL)
(86) International application number: EP9910497
(87) International publication number: WO00040835

(56) References cited:
- EP-A- 0 496 128
- WO-A-95/09970
- PATENT ABSTRACTS OF JAPAN vol. 14, no. 146, 20 March 1990 (1990-03-20) & JP 02 017921 A (MITSUBISHI HEAVY IND LTD), 22 January 1990 (1990-01-22) cited in the application

## Description

### FIELD OF THE INVENTION

The present invention relates to a method for removing condensables from a natural gas stream and to a well completion system for producing gas from a subterranean formation wherein said method is applied.

### BACKGROUND TO THE INVENTION

Natural gas, produced from a subsurface or sub-sea gas producing formation (hereinafter subterranean formation), requires the separation of components that are normally liquid or that have relatively high condensation temperatures. These components, which are collectively referred to in the claims and the description with the expression "the condensables" include water, propane, butane, pentane, propylene, ethylene, acetylene and others such as carbon dioxide, hydrogen sulfide, nitrogen gas and the like. Typically, the gas stream is treated, on surface, downstream of a wellhead that is connected with a subterranean gas producing formation via a primary wellbore containing a tubing extending downhole from the wellhead.

This is not very cost-effective, in particular for multilateral wells (i.e., well completion systems comprising a multiple branched wellbore system connecting the reservoir of a producing formation with one or more other reservoirs) wherein the natural gas and/or the condensables, or part of either, is re-injected from one formation into another or within the formation from one reservoir zone into another. This is done, for instance, to stimulate a new well or revive an existing well; or to store the natural gas or condensables for later use, etc.

Separators that are effective to lower dew points of gases generally require complex equipment and instrumentation, such as refrigerated sponge oils or glycols absorbers. Such operations are generally too complex to be placed at wellheads such as sea floor wellheads, and too expensive to be placed at individual wellheads in a gas producing field.

Downhole separators to remove water from gas as it is being produced are known, for example in US-A-5,444,684. This device uses floating balls that float up and block a flowpath when a water level in the wellbore becomes high, and then as gas pressure builds, and forces the water level down, allowing production of gas that is free of liquid water. This device is only capable of keeping liquid water out of produced gas. It is not capable of removing either condensables or water from the produced gas.

US-A-5,794,697 also discloses a downhole separator for taking gas from a mixture of liquids and gas produced into a wellbore. This patent focuses on downhole compression of the gas and re-injection of the gas into a gas cap over the oil remaining in the formation. A separator is shown and described as an auger that imparts a swirling motion to the fluids, and then removal of the gas from the center of the swirl. This separator also does not lower the dew point temperature of the gas (i.e. remove the condensables), but only separates existing phases.

The separation method and inertia separator according to the preamble of claims 1 and 7 are known from International patent application WO 95/09970. The known separator includes a cyclone in which produced water is separated from the produced gas and water vapor is separated from the gas in a separate high pressure membrane.

It would be desirable to have a more simple separator for removing condensables and/or water from a natural gas stream upstream of the wellhead choke, i.e., before entering surface or sub-sea facilities with typical lower pressure ratings in the order of 15 MPa (15 MN/m²) or less. Firstly, this is because a higher pressure drop for separation is still available upstream of the wellhead choke, thereby making better use of the available potential energy, which otherwise gets dissipated at the wellhead choke. Secondly, this is because as gas flows up the wellbore, it may be cooled by heat transfer to the more shallow formations surrounding the wellbore, and by adiabatic expansion of the gas as it flows up the well. When the gas cools, the condensables and/or water may then condense from the previously saturated gas stream. Condensed liquids in a gas producing borehole could cause many problems. The separate liquid phase could considerably increase the static head within the wellbore, and therefore reduce the well head pressure and/or gas production. Depending on the flow regime that results, the liquids could build up until the bottom of the wellbore is expose to a considerable additional liquid head. Also, water could combine with hydrocarbons and/or hydrogen sulfide to form hydrates in the wellbore. These hydrates could plug the well. To prevent this, it is common to inject alcohols or glycols into gas producing wellbores to prevent plugging with solid hydrates. This injection is relatively expensive, and further, results in more liquids being present in the wellbore. Spills of these liquids can be particular environmental concerns because they are by nature miscible with water.

Numerous methods and devices exist for separating components from gaseous or other fluids. Examples of conventional separation device include distillation columns, filters and membranes, settling tanks, centrifuges, electrostatic precipitators, dryers, chillers, cyclones, vortex tube separators and adsorbers. In addition, various inertia separators have been described in the art, equipped with a supersonic nozzle.

JP-A-02,017,921 refers to the separation of a gaseous mixture through the use of supersonic flow. The device includes a swirler positioned upstream of a supersonic nozzle. The swirling fluid stream then passes through an axially symmetric expansion nozzle to form fine particles. The swirl is maintained over a lengthy axial distance, creating a large pressure drop.

US-A-3,559,373 refers to a supersonic flow separator including a high pressure gas inlet, a rectangular-shaped throat, and a U-shaped rectangular-cross sectional channel. The channel includes an outer curved permeable wall. A gas stream is provided to the gas inlet at subsonic speeds. The gas converges through the throat and expands into the channel, increasing the velocity to supersonic speed. The expansion of the flow in the supersonic region results in droplet coalescence and the larger droplets pass through the outer permeable wall and are collected in a chamber.

EP-A-0,496,128 refers to a method and device for separating a gas from a gas mixture. The device includes a cylinder which converges to a nozzle and then diverges into a swirl zone. Gas enters an inlet port of the cylinder at subsonic speeds and flows through a converging section of the nozzle. The flow expands out of the converging section into the diverging section of the cylinder at supersonic velocity. A pair of deltoid plates impart a swirl to the supersonic flow. The combination of the supersonic velocities and the swirl assist in condensing and separating a condensed component from the gaseous components of the flow stream. An outlet pipe is positioned centrally within the cylinder to allow discharge of the gaseous components of the flow stream at supersonic velocity. The liquid components continue on through a second diverging section, which drops the velocity to subsonic, and through a fan, ultimately exiting the cylinder through a second outlet.

WO 99/01194 describes a similar method and corresponding device for removing a selected gaseous component from a stream of fluid containing a plurality of gaseous components. This device is equipped with a shock flow inducer downstream of the collecting zone so as to decrease the axial velocity of the stream to subsonic velocity. Application of a shock wave in this manner results in a more efficient separation of the formed particles.

These references describe various supersonic inertia separators. However, none describe or hint at their use upstream of a wellhead choke of a well completion system, and/or instead of the wellhead choke.

### SUMMARY OF THE INVENTION

In accordance with the invention there is provided a method for removing condensables from a natural gas stream upstream of a wellhead choke connected to a subterranean formation in accordance with the characterizing features of claim 1.

The invention also concerns a well completion system for producing gas from a subterranean formation in accordance with the characterizing features of claim 7.

### DETAILED DESCRIPTION OF THE INVENTION

Supersonic inertia separators as referred to herein before require a predominantly gaseous stream (i.e. containing less than 10 %wt of either solids or liquids) at sufficient pressure to undergo supersonic acceleration when passing through the converging-diverging Laval nozzle thereof. Pressures in the well and prior to the wellhead choke can be in the same range as in the subterranean formation, and are normally more than adequate. The method can therefore be used in the wellbore of an unilateral well; in the primary wellbore or one or more of the branched wellbores of a multilateral wellbore, or instead of the choke of a wellhead. The method can therefore be used on the surface, but also subsurface or sub-sea.

It will be understood that if the supersonic inertia separator is used instead of a choke, than in an elegant manner natural gas is freed from condensables at the same time as the reduction in pressure occurs to the level required for a distribution network.

One of the more attractive advantages of the present invention concerns the minimum or even lack of moving parts in the supersonic inertia separator, allowing the use thereof at locations that ordinarily require remote controls. The supersonic inertia separator that is preferred, is of the type described in EP-A-0,496,128, i.e., wherein the supersonic stream containing droplets and/or particles is forced into a swirling motion, thereby causing the droplets and/or particles to flow to a radially outer section of a collecting zone in the stream, followed by the extraction of these droplets and/or particles in a supersonic collection zone.

In another preferred embodiment of the present invention, a shock wave occurs that is caused by transition from supersonic to subsonic flow upstream of the separation of the droplets and/or particles from the collecting zone. It was found that the separation efficiency is significantly improved if collection of the particles in the collecting zone takes place after the shock wave, i.e. in subsonic flow rather than in supersonic flow. This is believed to be because the shock wave dissipates a substantial amount of kinetic energy of the stream and thereby strongly reduces the axial component of the fluid velocity while the tangential component (caused by the swirl imparting means) remains substantially unchanged. As a result the number density of the particles in the radially outer section of the collecting zone is significantly higher than elsewhere in the conduit where the flow is supersonic. It is believed that this effect is caused by the strongly reduced axial fluid velocity and thereby a reduced tendency of the particles to be entrained by a central "core" of the stream where the fluid flows at a higher axial velocity than nearer the wall of the conduit. Thus, in the subsonic flow regime the centrifugal forces acting on the condensed particles are not to a great extent counter-acted by the entraining action of the central "core" of the stream, so that the particles are allowed to agglomerate in the radially outer section of the collecting zone from which they are extracted.

Preferably the shock wave is created by inducing the stream of fluid to flow through a diffuser. A suitable diffuser is a supersonic diffuser. A diffuser may be, for example, a diverging volume, or a converging and then diverging volume.

In an advantageous embodiment, the collecting zone is located adjacent the outlet end of the diffuser.

The present invention may be practiced in combination with other operations to effect drying of the fluid stream, or practiced in front of conventional separators in order to reduce the size and or capacity required of the latter. Also, either of the stream containing liquids from the collecting zone or the stream from which the liquids have been separated could be subjected to an additional separation step, for example, a dryer or separator.

Advantageously, any gaseous fraction separated together with the condensables, e.g. from the radially outer section of the collecting zone in case of an supersonic inertia separator of the type described in EP-A-0,496,128 or WO 99/011994, can be recycled back to the inlet, preferably using an inductor to increase the pressure back to the pressure of the inlet stream.

Another alternative in the practice of the present invention is to route the condensables to a liquid-liquid separator, wherein for instance a liquid hydrocarbon phase is isolated from an aqueous phase. The liquid water phase could be, for example, re-injected into the same formation, at a shallower or deeper reservoir zone, or into a different formation. The liquid hydrocarbon phase could be produced either with the gases, instead of the gases, or separately from the gases. Re-injection of the liquid hydrocarbon phase, e.g. for later production, is also an option.

Suitably the means for inducing the stream to flow at supersonic velocity comprises a Laval-type inlet of the conduit, wherein the smallest cross-sectional flow area of the diffuser is preferably larger than the smallest cross-sectional flow area of the Laval-type inlet.

The present invention may also be utilized to reinject gas separated from condensables within a wellbore. For example, when multiple reservoirs are present (for example, stacked reservoirs or different reservoirs penetrated by different wellbores of a multilateral well) and it is desired to produce only condensates from the gas. Gases may be re-injected to prevent flaring or to maintain reservoir pressure. A separator of the present invention could remove condensable fluids from gas, and the gas could then be re-injected from the same wellbore.

### BRIEF DESCRIPTION OF THE FIGURES

FIG. 1 shows schematically a longitudinal cross-section of a first preferred embodiment of the separator useful in the practice of the present invention.
FIG. 2 shows schematically a longitudinal cross-section of a second embodiment of the device useful in the practice of the present invention.
FIG. 3 shows schematically a device according to the present invention within a wellbore of a well completion system.
FIG. 4 shows schematically an device used to demonstrate the device useful in the practice of the present invention.
FIGS. 5A and 5B show schematically an device according to the present invention at a wellhead of a well completion system.
FIG. 6 is a schematic drawing of an embodiment of the present invention wherein the liquid stream from the separator of the present invention is routed to a liquid-liquid separator, and an aqueous phase is separated from a hydrocarbon phase, and the aqueous phase is re-injected into a formation.
FIG. 7 is a schematic drawing of an embodiment of the present invention wherein condensate is produced, and gas is re-injected into a formation.

### DESCRIPTION OF A PREFERRED EMBODIMENT

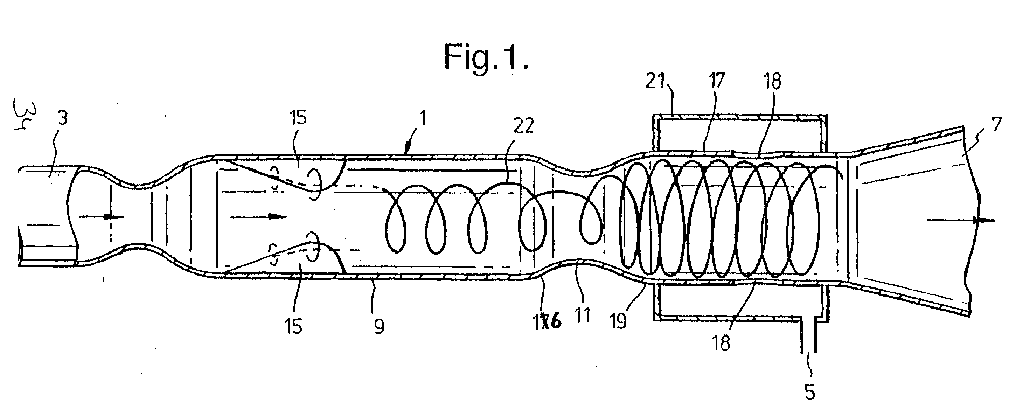

In Fig. 1 is shown a conduit in the form of an openended tubular housing 1. A fluid inlet 3 is provided at one end of the housing, a first outlet 5 for liquid laden fluid near the other end of the housing, and a second outlet 7 for substantially liquid-free fluid at the other end of the housing. The flow-direction in the device 1 is from the inlet 3 to the first and second outlets 5, 7. The inlet 3 is an acceleration section containing a Laval-type, having a longitudinal cross-section of converging-diverging shape in the flow direction so as to induce a supersonic flow velocity to a fluid stream which is to flow into the housing via said inlet 3. The housing 1 is further provided with a primary cylindrical part 9 and a diffuser 11 whereby the primary cylindrical part 9 is located between the inlet 3 and the diffuser 11. One or more (for example, four) delta-shaped wings 15 project radially inward from the inner surface of the primary cylindrical part 9, each wing 15 being arranged at a selected angle to the flow-direction in the housing so as to impart a swirling motion to fluid flowing at supersonic velocity through the primary cylindrical part 9 of the housing 1.

The diffuser 11 has a longitudinal section of converging - diverging shape in the flow direction, defining a diffuser inlet 16 and a diffuser outlet 19. The smallest cross-sectional flow area of the diffuser is larger than the smallest cross-sectional flow area of the Laval-type inlet 3.

The housing 1 further includes a secondary cylindrical part 17 having a larger flow area than the primary cylindrical part 9 and being arranged downstream the diffuser 11 in the form of a continuation of the diffuser 11. The secondary cylindrical part 17 is provided with longitudinal outlet slits 18 for liquid, which slits 18 are arranged at a suitable distance from the diffuser outlet 19.

An outlet chamber 21 encloses the secondary cylindrical part 17, and is provided with the aforementioned first outlet 5 for a stream of concentrated liquids.

The secondary cylindrical part 17 debouches into the aforementioned second outlet 7 for substantially gas.

Normal operation of the device 1 is now explained for the embodiment using subsonic separation.

A stream containing micron-sized particles is introduced into the Laval-type inlet 3. As the stream flows through the inlet 3, the stream is accelerated to supersonic velocity. As a result of the strongly increasing velocity of the stream, the temperature and pressure of the stream may decrease to below the condensation point of heavier gaseous components of the stream (for example, water vapors) which thereby condense to form a plurality of liquid particles. As the stream flows along the delta-shaped wings 15 a swirling motion is imparted to the stream (schematically indicated by spiral 22) so that the liquid particles become subjected to radially outward centrifugal forces. When the stream enters the diffuser 11 a shock wave is created near the downstream outlet 19 of the diffuser 11. The shock wave dissipates a substantial amount of kinetic energy of the stream, whereby mainly the axial component of the fluid velocity is decreased. As a result of the strongly decreased axial component of the fluid velocity, the central part of the stream (or "core") flows at a reduced axial velocity. This results in a reduced tendency of the solids and condensed particles to be entrained by the central part of the stream flowing in the secondary cylindrical part 17. The condensed particles can therefore agglomerate in a radially outer section of a collecting zone of the stream in the secondary cylindrical part 17. The agglomerated particles form a layer of liquid which is extracted from the collecting zone via the outlet slits 18, the outlet chamber 21, and the first outlet 5 for substantially liquid. It is, however, also within the spirit of this invention to remove the condensed particles at supersonic velocity, without an upstream shock wave.

The stream from which condensable vapors have been removed is discharged through the second outlet 7 for substantially liquid-free gas.

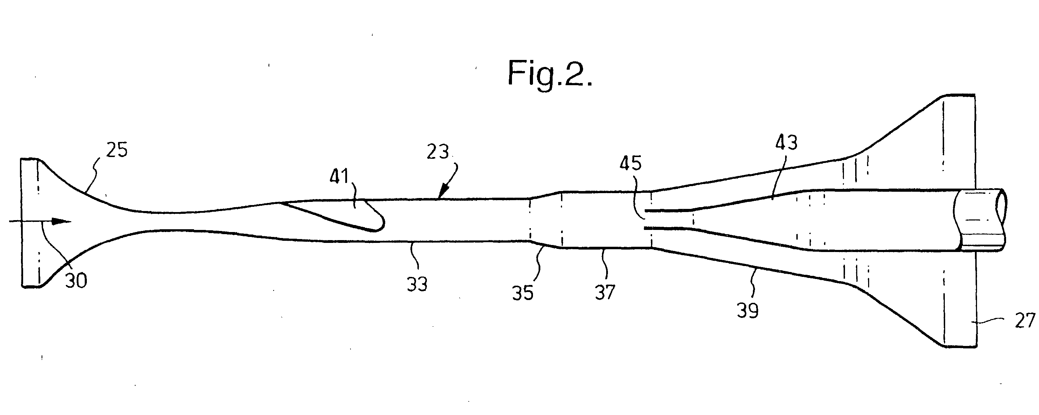

In Fig. 2 is shown a second embodiment of the device for carrying out the invention. This device has an open-ended tubular housing 23 with a Laval-type fluid inlet 25 at one end and a first outlet 27 for stream containing the solids and any condensed liquid at the other end of the housing. The flow-direction for fluid in the device is indicated by arrow 30. The housing has, from the inlet 25 to the liquid outlet 27, a primary substantially cylindrical part 33, a diverging diffuser 35, a secondary cylindrical part 37 and a diverging part 39. A delta-shaped wing 41 projects radially inward in the primary cylindrical part 33, the wing 41 being arranged at a selected angle to the flow-direction in the housing so as to impart a swirling motion to fluid flowing at supersonic velocity through the housing 23. A tube-shaped second outlet 43 for substantially gas extends through the first outlet 27 co-axially into the housing, and has an inlet opening 45 at the downstream end of the secondary cylindrical part 37. The outlet 43 may be internally provided with a straightened (not shown), e.g. a vane-type straightener, for transferring swirling flow of the gas into straight flow.

Normal operation of the second embodiment is substantially similar to normal operation of the first embodiment. Supersonic swirling flow occurs in the primary cylindrical part 33 and a shock wave, if any, occurs near the transition of the diffuser 35 to the secondary cylindrical part 37. Subsonic flow occurs if a diffuser is used in the secondary cylindrical part 37. The stream containing the solid particles and any condensed liquids is discharged through the first outlet 27, and the dried gas is discharged through the second outlet 43 in which the swirling flow of the gas is transferred into straight flow by the straightener.

In the above detailed description, the housing, the primary cylindrical part, the diffuser and the secondary cylindrical part have a circular cross-section. However, any other suitable cross-section of each one of these items can be selected. Also, the primary and secondary parts can alternatively have a shape other than cylindrical, for example a frusto-conical shape. Furthermore, the diffuser can have any other suitable shape, for example without a converging part (as shown in Fig. 2) especially for applications at lower supersonic fluid velocities.

Instead of each wing being arranged at a fixed angle relative to the axial direction of the housing, the wing can be arranged at a changing angle with respect to the direction of flow, preferably in combination with a spiraling shape of the wing. A similar result can be obtained by arranging flat wings along a path of increasing angle with respect to the axis of initial flow.

Furthermore, each wing can be provided with a raised wing-tip (also referred to as a winglet).

Instead of the diffuser having a diverging shape (Fig. 2), the diffuser alternatively has a diverging section followed by a converging section when seen in the flow direction. An advantage of such diverging-converging shaped diffuser is that less fluid temperature increase occurs in the diffuser.

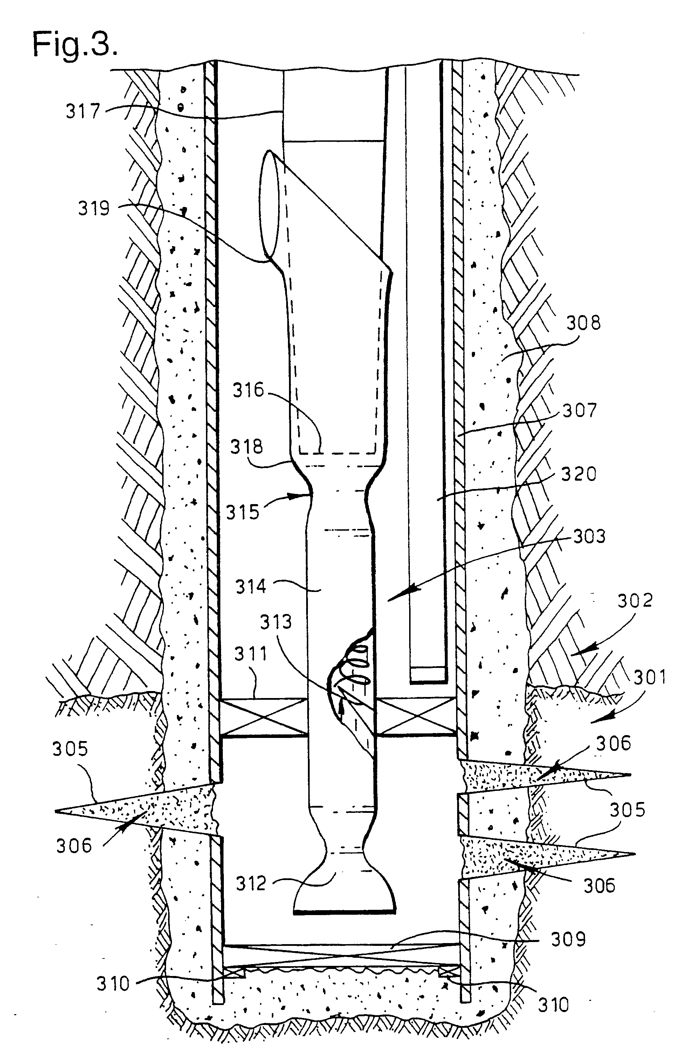

Referring now to FIG. 3, an device of the present invention is shown in a wellbore. A formation from which hydrocarbons are being produced 301 is below an overburden 302, and is penetrated by a wellbore 303. The wellbore provides communication from the formation through perforations 305 which are shown as packed with sand 306 to prevent collapse of the formation into the perforations. A casing 307 is placed in the wellbore and secured with cement 308 that is placed by circulation from the inside of the casing and out the outside to provide support. The cement is followed by a cement plug 309 that remains in the bottom of the casing, and is caught by a lip 310 provided in the bottom segment of casing for that purpose.

Gas flowing from the formation is forced through the separator of the present invention by a sealing packer 311 that is effective to isolate the wellbore in the region of the producing formation. Gas from the producing formation goes through the inlet Laval nozzle 312 where supersonic velocities are created, and wing 313 induces a swirl to the supersonic flow. A sufficiently long flow path 314 is provided for the supersonic flow region. A diffuser section 315, if any, is provided to create a sonic shock wave, preferably just upstream of the separation of the liquids from the radially outer section from the vapors, which are captured in a vortex finder 316 and routed to the surface through a production tubing 317. Flow from the radially outer section of portion of the collection section 318 is shown as being routed to the outside of the production tubing to an annular volume between the casing 307 and the production tubing 317 by way of a tangential outlet 319. The tangential outlet can help separate liquids from the vapors in the liquid stream. Although the stream being removed from the radially outer section of the collection section is initially liquid, considerable vaporization may occur as the gas is re-compressed in the shock wave induced by the diffuser. But the liquid could be sufficiently concentrated that even this rise in temperature does not vaporize all of the condensables in the stream. A typical sucker-rod pump or downhole electrical pump 320 is shown to remove liquid water that has fallen back to the isolation packer 311. Re-injection into the formation is also possible, both for liquids and gases, possibly with the help of electric submersible pumps if required by the formation pressure regime or in case of multilateral wells.

The stream concentrated in water and/or heavy hydrocarbons is preferably of such a composition that addition of components to prevent formation of hydrates is not needed. Even if hydrate inhibition is desirable, the amount of hydrate inhibition compound needed will be considerably reduced because of the need to treat only the smaller volume of fluid to be treated.

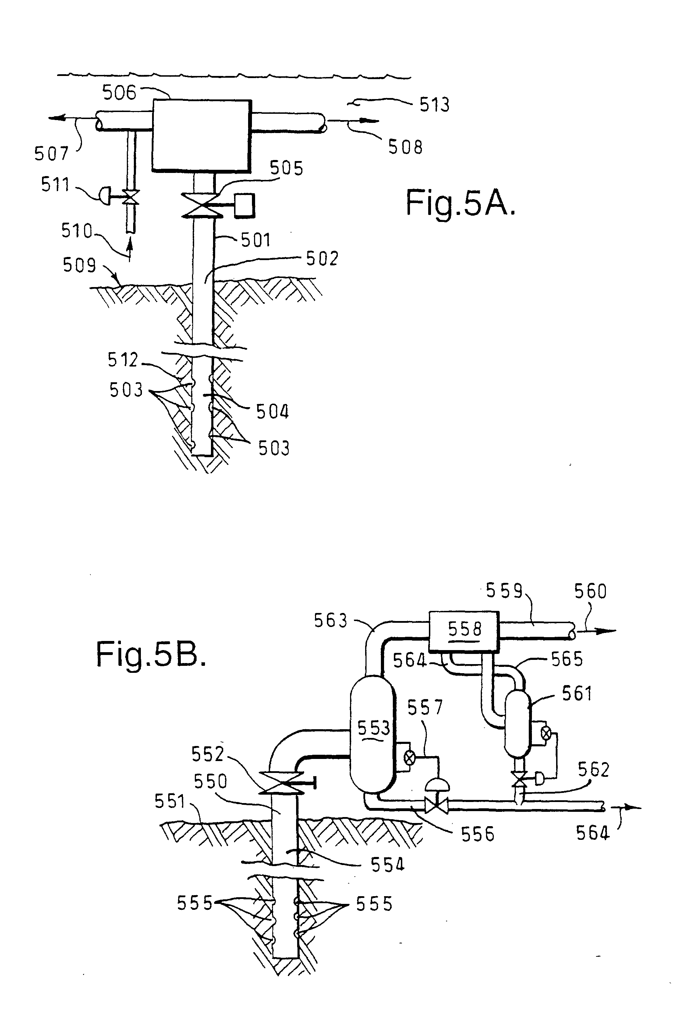

Referring now to FIG. 5A, a device of the present invention is shown schematically at a sub-sea wellhead. A sub-sea well 501, in a body of water 513 is shown with a casing 502, with perforations 503 providing communication from a formation 512 to the inside of the wellbore 504. Typical well head equipment 505 is schematically shown. The separator of the present invention 506 separates a mostly liquid stream 507 from a dried stream of vapors 508. Temperatures at the sea floor 509 approach freezing temperatures, and formation of hydrates along sea floor piping is therefore a serious concern. The present invention provides a simple, low maintenance and inexpensive dehydration system. The separated liquids may be provided with hydrate inhibition additive 510 through a controlled injection 511.

Referring now to FIG. 5B, another embodiment is shown, with a wellbore 550 located at a surface 551. The wellbore is cased with a casing 554 provided with perforations 555. Typical wellhead equipment may be provided 552. A liquid-vapor separator 553 is provided with a liquid outlet 556 and a level control system 557. A vapor outlet from the liquid-vapor separator 563 is routed to the dehydrator of the present invention 558. The vapors from the outlet 559 of the separator of the present invention is dry gas 560 having a dew point lower than the dew point of the produced gases. Liquid from the separator of the present invention 564 may contain vapors, which will be saturated, and are therefore preferably routed to a second vapor-liquid separator 561. The liquids from this second separator 562 can be combined with liquids from the first separator, or routed separately to surface equipment. Alternatively, liquids from the second separator may be re-injected into a formation for effective disposal. The liquids from the second separator may be pumped to a higher pressure reservoir, which may be connected via a different wellbore of a multilateral well, or flow by pressure drop available to a low pressure formation. The liquids from the second separator, if re-injection is desirable, may be collected and then re-injected, or re-injected into the wellbore from which the gas was produced.

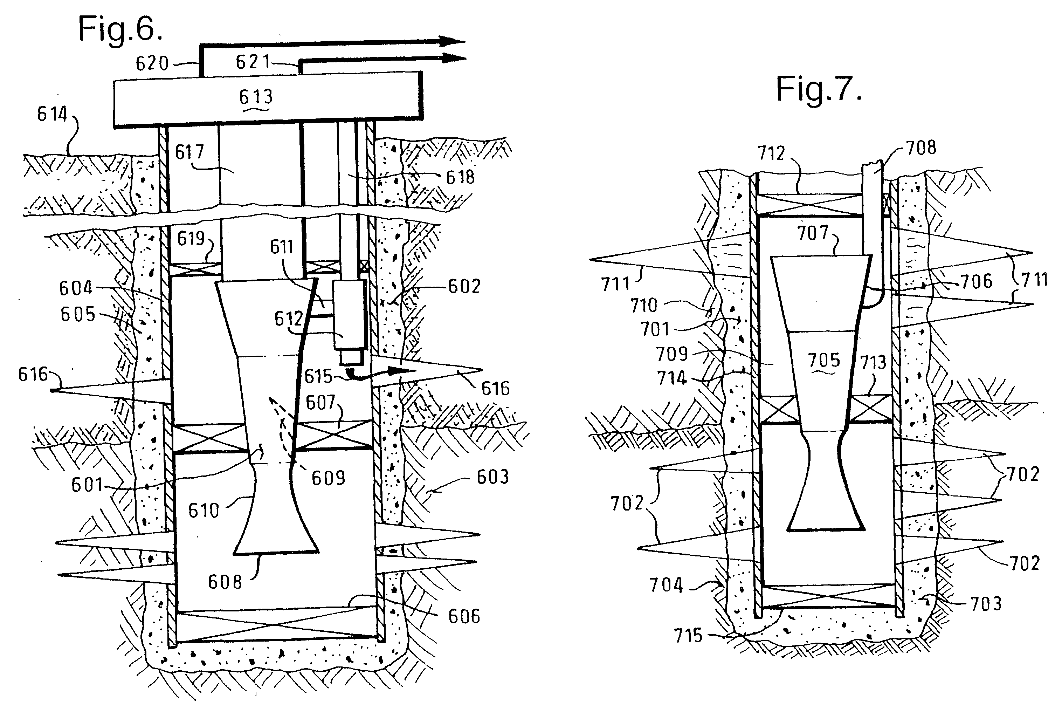

Referring now to FIG. 6, an embodiment of the present invention is shown wherein a separator of the present invention 601 is within a wellbore 602 that is perforated in a hydrocarbon gas producing formation 603. The wellbore is shown as cased with a casing 604 that is cemented with cement 605, with a cement shoe 606. A packer 607 isolates the producing portion of the wellbore, forcing the produced gas into an inlet 608 to the separator of the present invention. A wing 609 induces a swirl to the supersonic gases that have passed through the Laval nozzle 610, and condensables are collected and exit the separator from a liquid outlet 611. Liquids from the liquid outlet pass to a liquid-liquid separator 612. The liquid-liquid separator can be any kind known in the art. The liquids are separated into a hydrocarbon phase, which is routed to a wellhead 613 at the surface 614, through a tubing 618 such as a coiled tubing. A liquid aqueous phase 615 which is routed through perforations 616 to a formation. A second set of packers 619 is shown as isolating a section of the wellbore for re-injection of the aqueous phase. Vapor from which the condensables including water have been removed are routed through a production tubing 617 to the wellhead where produced gas 620 and produced hydrocarbon liquids 621 are gathered separately.

Referring now to FIG. 7, a wellbore 701 is shown with a casing 714 perforated by perforations 702. Cement 703 secures the casing in a formation 704 from which hydrocarbons are produced, the cement having been forced down the casing by pressure behind a cement shoe 715. The hydrocarbons are forced through a separator 705 of the present invention. The separator of the present invention has a liquid outlet 706 and a vapor outlet 707. The liquid outlet is in communication with a production tubing 708. The vapor outlet is in communication with a segment of the volume inside the casing 709 that is in communication with a second formation 710 to which the vapors are to be re-injected through more perforations 711. The segment of the volume inside of the casing in communication with the second formation is isolated by and upper packer 712 and a lower packer 713.

Not shown is the use of a device as described in either FIG. 6 or 7, in a multiple branched wellbore system. If used in a branched wellbore system, the device is preferably used at the conjunction point of the wellbores. In such arrangement the, or part of the condensable, or instead the, or part of the treated gas stream may be directed via the branch wellbore to either a different formation or a different reservoir zone. Such a system would be used, for example, to avoid water production to the surface, which would require further processing. It may also be used to flow gas to a reservoir zone used for pressure maintenance or underground gas storage.

The swirl imparting means can be arranged at the inlet part of the conduit, instead of downstream the inlet part.

### EXAMPLE

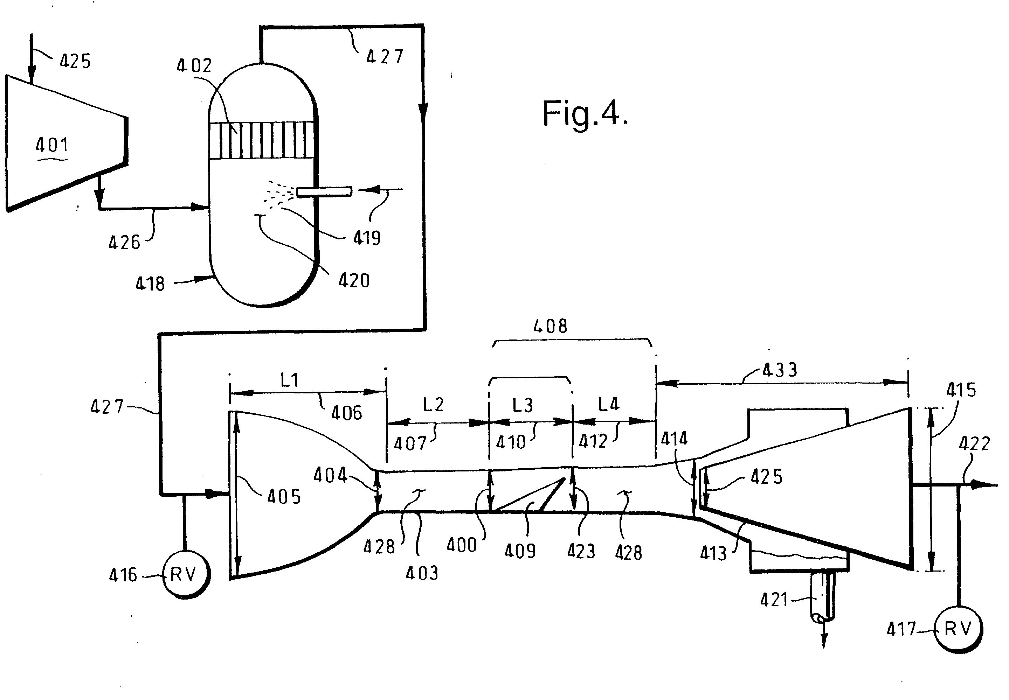

A test device for the present invention was prepared, and demonstrated for separating water vapor from air at ambient conditions. Obviously, in case the device is used subsurface, sub-sea or at the wellhead, different temperatures pressures and Mach numbers may apply. However, a skilled man will have no difficulty making the necessary adaptations. Fig. 4 is referred to for the general configuration of the device used.

In this example the air 425 was pressurized to 140 KPa (1.4 bar (a)) by means of a blower 401 to provide pressurized air 426. After the blower the air was cooled to about 25 to 30 °C by fin cooler 402, located in a vessel 418, and water 419 was sprayed into the vapor space below the cooler 420 to ensure that the air was near water saturation (RV = 90%). This water saturated air 427 was fed to the feed liquid-vapor separator 403 where the water was separated with a small amount of slip air into a wet stream 421, coming along with this water liquid stream and dried air 422.

In this example, the device was provided with tubular flow ducts although the same results can be achieved for rectangular or asymmetric duct cross sections. Therefore diameters of devices are mentioned and always refer to the inner diameter.

The typical inlet conditions are summarized below:

| | | |
|---|---|---|
| 1. | Mass flow rate | 1.2 kg/s |
| 2. | Inlet pressure | 140 KPa (1400 mbar (a)) |
| 3. | Inlet temperature | 25 °C |
| 4. | Inlet humidity | 90% |

The device condensed water vapor, resulting in a mist flow containing large number of water droplet. The final temperature and pressure in the supersonic zone 428 were found to be -28 °C and 68 KPa (680 mbar (a)), resulting in a water vapor fraction that was negligibly small.

The nozzle throat diameter 404 was 70 mm. The inlet diameter 405 was 300 mm, although its value is not significant with respect to the working of the device. The nozzle outlet diameter 400 was 80 mm in order to obtain supersonic flow conditions; typically the corresponding Mach number, M = 1.15.

The lengths of the nozzle are determined by the cooling speed, which for this case is 19000 K/s. Persons of ordinary skill in the art can determine pressure and temperature profiles for the flow through the device, and thus the cooling rate. The cooling speed determines the droplet size distribution. Lowering the value of the cooling speed results in larger average droplet sizes. The lengths of the nozzle were:
L1, 406 : 700 mm : from nozzle inlet to nozzle throat
L2, 407 : 800 mm : from nozzle throat to nozzle outlet

In order to decrease frictional losses the wall roughness was small, preferably 1 micron or less.

Depending on the application any rigid material can be used for the nozzle device, as long as the before mentioned design parameters are respected.

The vortex tube 408 was connected between the nozzle outlet and the diffuser. In the vortex tube a wing-like, swirl imparting internal 409 was present. At the edge of this internal a vortex was created on the upper (low-pressure) side and shed from the plane, preferably at the trailing edge. The root cord of this wing-like plate was attached to the inner wall of the vortex tube.

The inlet diameter of the vortex tube 400 was 80 mm. In this case vortex tube was slightly conical; the diameter increased linearly to 84 mm (423) over a length of approximately the cord length of the wing.

After the conical section of the vortex tube 410, the vortex tube diameter was constantly 84 mm over a length were the droplets deposited on the inner wall (separation length). These two lengths were:
L3, 410 : 300 mm : from wing apex to wing trailing edge
L4, 412 : 300 mm : from wing trailing edge to diffuser

The sizing of the wing internal depended on the preferred circulation or integral vorticity. This circulation is typical 16 m²/s resulting from a wing cord length of 300 mm, a wing span at the trailing edge of 60 mm and at an incidence of the wing cord at the axis of the tube of 8°. The sweepback angle of the leading edge (from perpendicular to the flow) was 87° and the sweepback angle of the trailing edge was 40°. The edges of the wing were sharp. The plane of the wing was flat and its profile was extremely slender. The thickness of the wing was about 4 mm at the root. The wing was at an 8° angle to the axis of the tube.

In the drainage section withdrawal of liquids out of the vortex tube was achieved. The drainage section is not a sharp distinguished device but is an integral part of the vortex tube, by means of, for example, slits, porous materials, holes in the vortex tube walls; or, as shown in FIG. 4, is an integral part of the diffuser by means of a vortex finder 413 (co-axial duct). In this example, a vortex finder (co-axial duct) was placed centrally in the duct after the shock wave, which was present directly after the vortex tube in the first diffuser part 414.

The sizing of the vortex tube is dependent on the diameter ratio between diffuser diameter at that location 424 (90 mm at the inlet) and vortex finder inlet diameter at that point 425 (85 mm at the inlet). The cross-sectional area difference between the latter two influences the minimal flow, which is extracted from the main stream containing the liquids. In this case this minimal flow was 10% of the main flow i.e. 0.12 kg/s. The diffuser length 433 was 1500 mm.

In the diffuser the remaining kinetic energy in the flow is transformed to potential energy (increase of static pressure). It is desirable to avoid boundary layer separation, which can cause stall resulting in a low efficiency. Therefore the half divergence angle of the diffuser in the present test set-up should be preferably less then 5° as in this case 4° was used. The diffuser inlet diameter was the same as the vortex finder inlet diameter (85 mm). The outlet diameter 415 of the diffuser was 300 mm, and the dry air at this point was at about atmospheric pressure. The performance of this device was measured by two humidity sensors (capacitive principle: manufacturer 'Vaisala') one at the air inlet 416 and the other at the dried air outlet 417, both were corrected for temperature and pressure. The typical values of the inlet water fractions were 18-20 gram of water vapor per kg dry air. Typical values of the outlet water were 13-15 gram of water vapor per kg dry air. This can be expressed in separation efficiencies of about 25% of the water vapor in the inlet removed. This also corresponds to the separation of liquids condensed in the super sonic region, because most of the liquid water present in the inlet stream condenses at that point.

## Claims

1. A method for removing condensables from a natural gas stream upstream of a wellhead choke (505,552) connected to a subterranean formation (301,603,704) using a downhole inertia separator in which droplets and/or particles are separated from the gases and the gas from which the condensables have been removed is collected, **characterized in that** the method further comprises the steps of:
(A) inducing the natural gas stream to flow at supersonic velocity through an inertia separator comprising a conduit (1,23,314) having an acceleration
section (3,25,312) in which the gas stream is accelerated to a supersonic velocity thereby causing it to cool to a temperature that is below a temperature at which condensables will begin to condense forming separate droplets and/or particles; and
(B) transporting the gas and/or the condensed condensables to a wellhead (505,552) and/or re-injecting it into the subterranean formation (301,603,704) from which it has been produced, or into a different formation (710), with the proviso that not all of the collected gas and condensables are re-injected into the same reservoir zone of the same formation (301,603,704).

2. The method of claim 1, wherein in a swirl imparting section (15,41,313,409) a swirling motion is-induced to the supersonic stream of fluid thereby causing the liquid droplets to flow to a radially outer section of a collecting zone (11,37,318) in the stream, followed by the subsonic or supersonic extraction of the liquids into an outlet stream from the radially outer section of the collecting zone (11,37,318).

3. The method of claim 2, wherein the swirling motion induced to the supersonic stream of fluid causes the condensables to flow to a radially outer section of a collecting zone (11,37,318) in the stream, followed by the subsonic or supersonic extraction of the condensables into an outlet stream from the radially outer section of the collecting zone (11,37,318).

4. The method of claim 3, wherein the shock wave is created by inducing the stream of fluid to flow through a diffuser (11,315).

5. The method of any one of claims 1 to 4, wherein transporting the gases from which the condensables have been removed to a wellhead (505,552) or different reservoir zone is accomplished through a production tubing (317,617), and the condensables or part of the condensables are transported to the surface through a different flowpath (618,708).

6. The method of claim 1 wherein water is removed from the gas as a condensable component.

7. A well completion system for producing gas from a subterranean formation comprising a wellhead (505,552), a wellbore containing a tubing (317,617) extending downhole from the wellhead (505,552), and an inertia supersonic separator comprising
optionally, a swirl imparting section (15,41,313,409) that imparts a swirling motion to the gas; and
a collection section (7,43,316) wherein a gas stream containing reduced amount of condensables is collected; **characterized in that** the inertia supersonic separator comprises
an acceleration section wherein in use gas from the subterranean formation (301,603,704) is accelerated to a supersonic velocity and condensables are condensed.

8. A well completion system as claimed in claim 7, comprising a supersonic inertia separator in a wellbore.

9. A well completion system as claimed in claim 7, comprising a supersonic inertia separator at the wellhead.

10. A well completion system as claimed in any one of claims 7 to 9, comprising a multiple branched wellbore system connecting the reservoir of a producing formation with one or more other reservoirs.

11. A well completion system as claimed in any one of claims 7 to 10, further comprising one or more submersible pumps.

12. A well completion system as claimed in claim 7, wherein the collection section (43,316) for collecting the gas stream containing a reduced amount of condensables is formed by a second outlet (43,316) which extends co-axially through a first outlet (27,318,319) for condensables into the tubular housing (23) of the inertia supersonic separator.

## Patentansprüche

1. Verfahren zum Entfernen von kondensierbaren Bestandteilen aus einem Erdgasstrom stromaufwärts eines Bohrlochkopf-Drosselventils (505, 552), das mit einer Untergrundformation (301, 603, 704) in Verbindung steht, unter Verwendung eines Bohrloch-Trägheitsabscheiders, in welchem Tröpfchen und/oder Teilchen aus den Gasen abgeschieden werden, und das Gas, aus welchem die kondensierbaren Bestandteile entfernt worden sind, gesammelt wird, **dadurch gekennzeichnet, daß** das Verfahren ferner die Schritte aufweist:
(A) Veranlassen, daß der Erdgasstrom mit Überschallgeschwindigkeit durch einen Trägheitsabscheider strömt, der eine Leitung (1, 23, 314) mit einem Beschleunigungsabschnitt (3, 25, 312) aufweist, in welchem der Gasstrom auf Überschallgeschwindigkeit beschleunigt wird, wobei seine Abkühlung auf eine Temperatur bewirkt wird, die unterhalb einer Temperatur liegt, bei welcher die kondensierbaren Bestandteile zu kondensieren beginnen, wobei sie gesonderte Tröpfchen und/oder Teilchen bilden; und
(B) Transportieren des Gases und/oder der kondensierten Bestandteile zu einem Bohrlochkopf (505, 552) und/oder Reinjizieren in die Untergrundformation (301, 603, 704), aus der sie gefördert worden sind, oder in eine andere Formation (710), wobei Vorsorge getroffen wird, daß nicht das gesamte gesammelte Gas und die kondensierbaren Bestandteile in die gleiche Reservoirzone der gleichen Formation (301, 603, 704) reinjiziert werden.

2. Verfahren nach Anspruch 1, bei welchem ein Verwirbelungsabschnitt (15, 41, 313, 409) dem Überschallstrom des Fluids eine Verwirbelungsbewegung erteilt, wodurch die flüssigen Tröpfchen zu einem radial äußeren Abschnitt einer Sammelzone (11, 37, 318) in dem Strom fließen, gefolgt von einem Unterschall- oder Überschallabziehen der Flüssigkeiten aus dem radial äußeren Abschnitt der Sammelzone (11, 37, 318) in einen Auslaßstrom.

3. Verfahren nach Anspruch 2, bei welchem die Verwirbelungsbewegung, welche dem Überschallstrom des Fluids aufgezwungen wird, bewirkt, daß die kondensierbaren Bestandteile zu einem radial äußeren Abschnitt einer Sammelzone (11, 37, 318) in dem Strom fließen, gefolgt von einem Abziehen der kondensierbaren Bestandteile bei Unterschall- oder Überschallbedingungen aus dem radial äußeren Abschnitt der Sammelzone (11, 37, 318) in einen Auslaßstrom.

4. Verfahren nach Anspruch 3, bei welchem die Schockwelle erzeugt wird, indem der Fluidstrom durch einen Diffusor (11, 315) geleitet wird.

5. Verfahren nach einem der Ansprüche 1 bis 4, bei welchem das Transportieren der Gase, aus welchen die kondensierbaren Bestandteile entfernt worden sind, zu einem Bohrlochkopf (505, 552) oder einer anderen Reservoirzone durch eine Förderverrohrung (317, 617) erreicht wird, und die kondensierbaren Bestandteile oder ein Teil der kondensierbaren Bestandteile durch einen anderen Strömungsweg (618, 708) zur Oberfläche transportiert wird.

6. Verfahren nach Anspruch 1, bei welchem Wasser aus dem Gas als kondensierbare Komponente entfernt wird.

7. Bohrloch-Ausrüstungssystem für die Förderung von Gas aus einer Untergrundformation mit einem Bohrlochkopf (505, 552), einem Bohrloch, das eine Verrohrung (317, 617) enthält, die sich vom Bohrlochkopf (505, 552) in das Bohrloch erstreckt, und einem Überschall-Trägheitsabscheider mit
gegebenenfalls einem Verwirbelungsabschnitt (15, 41, 313, 409), welcher dem Gas eine Verwirbelungsbewegung erteilt; und
einer Sammelzone (7, 43, 316), in welcher ein Gasstrom, der eine reduzierte Menge an kondensierbaren Bestandteilen enthält, gesammelt wird; **dadurch gekennzeichnet, daß** der Überschall-Trägheitsabscheider einen Beschleunigungsabschnitt aufweist, in welchem im Gebrauch das Gas aus der Untergrundformation (301, 603, 704) auf Überschallgeschwindigkeit beschleunigt wird und die kondensierbaren Bestandteile kondensiert werden.

8. Bohrloch-Ausrüstungssystem nach Anspruch 7, mit einem Überschall-Trägheitsabscheider in einem Bohrloch.

9. Bohrloch-Ausrüstungssystem nach Anspruch 7, mit einem Überschall-Trägheitsabscheider am Bohrlochkopf.

10. Bohrloch-Ausrüstungssystem nach einem der Ansprüche 7 bis 9, mit einem Bohrlochsystem mit mehreren Zweigen, welche das Reservoir der Förderformation mit einem oder mehreren anderen Reservoiren verbinden.

11. Bohrloch-Ausrüstungssystem nach einem der Ansprüche 7 bis 10, das ferner eine oder mehrere Tauchpumpen aufweist.

12. Bohrloch-Ausrüstungssystem nach Anspruch 7, in welchem die Sammelzone (43, 316) zum Sammeln des Gasstromes, der eine reduzierte Menge an kondensierbaren Bestandteilen enthält, durch einen zweiten Auslaß (43, 316) gebildet wird, der sich koaxial durch einen ersten Auslaß (27, 318, 319) für kondensierbare Bestandteile in das rohrförmige Gehäuse (23) des Überschall-Trägheitsabscheiders erstreckt.

## Revendications

1. Procédé pour enlever les matières condensables d'un courant de gaz naturel en amont d'une duse de tête de puits (505, 552) reliée à une formation souterraine (301, 603, 704) utilisant un séparateur à inertie de fond dans lequel les gouttelettes et/ou particules sont séparées des gaz et le gaz dont les matières condensables ont été enlevées est recueilli, **caractérisé en ce que** le procédé comprend de plus les étapes consistant à :
(A) amener le courant de gaz naturel à circuler à vitesse supersonique à travers un séparateur à inertie comprenant un conduit (1, 23, 314) comportant une section d'accélération (3, 25, 312) dans laquelle le courant de gaz est accéléré à une vitesse supersonique en amenant ainsi celui-ci à refroidir à une température qui est en dessous d'une température à laquelle les matières condensables commenceront à condenser en formant des gouttelettes et/ou particules séparées; et
(B) transporter le gaz et/ou les matières condensables condensées à une tête de puits (505, 552) et/ou les réinjecter dans la formation souterraine (301, 603, 704) d'où ils ont été produits, ou dans une formation différente (710), à la condition que pas la totalité du gaz et des matières condensables recueillis ne soit réinjectée dans la même zone de réservoir de la même formation (301, 603, 704).

2. Procédé suivant la revendication 1, dans lequel dans une section conférant de la turbulence (15, 41, 313, 409) un mouvement tourbillonnaire est induit au courant de fluide supersonique en amenant ainsi les gouttelettes de liquide à s'écouler vers une section radialement extérieure d'une zone de collecte (11, 37, 318) dans le courant, suivi de l'extraction subsonique ou supersonique des liquides dans un courant de sortie de la section radialement extérieure de la zone de collecte (11, 37, 318).

3. Procédé suivant la revendication 2, dans lequel le mouvement tourbillonnaire induit au courant de fluide supersonique amène les matières condensables à s'écouler vers une section radialement extérieure d'une zone de collecte (11, 37, 318) dans le courant, suivi de l'extraction subsonique ou supersonique des matières condensables dans un courant de sortie de la section radialement extérieure de la zone de collecte (11, 37, 318).

4. Procédé suivant la revendication 3, dans lequel l'onde de choc est créée en amenant le courant de fluide à s'écouler par un diffuseur (11, 315).

5. Procédé suivant l'une quelconque des revendications 1 à 4, dans lequel le transport des gaz dont les matières condensables ont été enlevées vers une tête de puits (505, 552) ou une zone de réservoir différente est réalisé par un tube de production (317, 617), et les matières condensables ou une partie des matières condensables sont transportées à la surface par un parcours d'écoulement différent (618, 708).

6. Procédé suivant la revendication 1, dans lequel de l'eau est enlevée du gaz sous la forme de composant condensable.

7. Système de complétion d'un puits pour la production de gaz à partir d'une formation souterraine comprenant une tête de puits (505, 552), un puits de forage contenant un tube (317, 617) s'étendant au fond à partir de la tête de puits (505, 552), et un séparateur supersonique à inertie comprenant, éventuellement, une section conférant de la turbulence (15, 41, 313, 409) qui confère un mouvement tourbillonnaire au gaz, et une section de collecte (7, 43, 316) dans laquelle un courant de gaz contenant une quantité réduite de matières condensables est recueilli, **caractérisé en ce que** le séparateur supersonique à inertie comprend une section d'accélération dans laquelle en cours d'utilisation le gaz provenant de la formation souterraine (301, 603, 704) est accéléré à une vitesse supersonique et les matières condensables sont condensées.

8. Système de complétion d'un puits suivant la revendication 7, comprenant un séparateur à inertie supersonique dans un puits de forage.

9. Système de complétion d'un puits suivant la revendication 7, comprenant un séparateur à inertie supersonique à la tête de puits.

10. Système de complétion d'un puits suivant l'une quelconque des revendications 7 à 9, comprenant un système de puits de forage branchés multiples reliant le réservoir d'une formation de production à un ou plusieurs autres réservoirs.

11. Système de complétion d'un puits suivant l'une quelconque des revendications 7 à 10, comprenant de plus une ou plusieurs pompes submersibles.

12. Système de complétion d'un puits suivant la revendication 7, dans lequel la section de collecte (43, 316) pour collecter le courant de gaz contenant une quantité réduite de matières condensables comprend une seconde sortie (43, 316) qui s'étend coaxialement dans une première sortie (27, 318, 319) pour les matières condensables dans l'enveloppe tubulaire (23) du séparateur supersonique à inertie.
